# EUROPÄISCHE PATENTSCHRIFT

(11) **EP 1 828 592 B1**
(45) Veröffentlichungstag und Bekanntmachung des Hinweises auf die Patenterteilung: **11.03.2009**
(21) Anmeldenummer: 05823181.2
(22) Anmeldetag: 20.12.2005
(51) Int. Cl.: F02M 21/02, F04B 37/06, C01B 3/04

(54) **KRAFTSTOFFVERSORGUNGSEINRICHTUNG F]R EIN MIT WASSERSTOFF BETREIBBARES KRAFTFAHRZEUG**
FUEL SUPPLY DEVICE FOR A MOTOR VEHICLE THAT CAN BE OPERATED BY HYDROGEN
DISPOSITIF D'ALIMENTATION EN CARBURANT POUR VEHICULE A MOTEUR A HYDROGENE

(30) Priorität: 23.12.2004 DE 102004062155
(43) Veröffentlichungstag der Anmeldung: 05.09.2007
(73) Patentinhaber: Bayerische Motoren Werke Aktiengesellschaft, 80809 München (DE)
(72) Erfinder: FRIEDRICH, Thomas, 82237 Wörthsee (DE)
(86) Internationale Anmeldenummer: PCT/EP2005/013739
(87) Internationale Veröffentlichungsnummer: WO 2006/069681

(56) Entgegenhaltungen:
- DE-A1- 3 342 581
- DE-A1- 10 301 159
- US-A- 4 016 836
- US-A- 4 211 537
- US-A- 5 305 714

## Beschreibung

Die Erfindung betrifft eine Kraftstoffversorgungseinrichtung für ein mit Wasserstoff betreibbares Kraftfahrzeug nach dem Oberbegriff des ersten Anspruchs, deren Wasserstoff-Entnahmeeinrichtung aus einem Kryotank, eine Druckerhöhungseinrichtung für gasförmigen Wasserstoff umfasst.

Es ist bereits bekannt, Kraftfahrzeuge mit Wasserstoff anzutreiben und diesen Treibstoff zum Beispiel als kondensiertes Gas in einem Behälter im Kraftfahrzeug zu speichern. Zu dieser verflüssigten Speicherung sind spezielle druckfeste Behälter notwendig, die aufgrund der tiefen Speichertemperaturen eine sehr gute Isolation besitzen sollten. Dabei ist bekannt, zur Vermeidung von Wärmeeintrag aus der Umgebung, doppelwandige, vakuumisolierte Behälter zu verwenden.

Des weiteren kann Wasserstoff in Kraftfahrzeugen, zu deren Betrieb, auch in Druckgasspeichern oder in Hydridspeichern bevorratet werden. Erfolgt die Speicherung allerdings in Form von tiefkaltem, verflüssigtem Wasserstoff, als kondensiertes Gas, wird eine für Fahrzeuge vorteilhafte hohe Reichweite erzielt, da in diesem Zustand eine hohe Energiedichte erreicht wird, zum Beispiel gegenüber einer Speicherung von warmem, komprimiertem Wasserstoff-Gas.

Der tiefkalte, flüssige Wasserstoffvorrat wird im Fahrzeug im siedenden Zustand in einem thermisch sehr gut isolierten, druckdichten Behälter gespeichert. Die Energiedichte des siedenden Wasserstoffs wird dabei durch Lagerung bei einer Temperatur wenig über der Siedetemperatur bei Umgebungsdruck, ca. 20 K, maximal. In den heute technisch umgesetzten Vorratsbehältern liegt der Wasserstoff typischerweise bei Temperaturen von ca. 21 K bis ca. 27 K und den damit korrespondierenden Siededrücken von ca. 2 bar (abs.) bis ca. 5 bar (abs.) vor.

Im unteren Teil des Vorratsbehälters liegt der siedende Wasserstoff als massedichtere flüssige Phase (wird im folgenden auch LH2 genannt) und darüber liegend als gasförmige Phase (wird im folgenden auch GH2 genannt) vor.

Die unmittelbare Förderung des Wasserstoffs (wird im folgenden auch H2 genannt) aus dem Vorratsbehälter in eine Vorlaufleitung, hin zu einem Verbraucher, erfolgt im einfachsten Fall über das zwischen Tankinnerem und der Umgebung anliegende statische Druckgefälle, oder durch eine gezielte Bedruckung des Vorratsbehälters. Dabei besteht grundsätzlich die Möglichkeit durch die geometrische Gestaltung der im Tankinneren beginnenden Vorlaufleitung, vorrangig LH2 oder nur GH2 zu fördern.

Gespeichertes H2 wird im allgemeinen aus der Gasphase als GH2 entnommen. Sofern H2 als LH2 aus der Flüssigphase entnommen wird, sind bei einer mobilen Anwendung die nachfolgenden Konditionierer, z.B. Druckerhöher, oder die Betriebsart eines Verbrauchers dennoch für die Förderung von GH2 ausgelegt. Dies ist erforderlich, da infolge der möglichen Abweichungen von der Normallage des mobilen Behälters, oder dynamischer, beschleunigter Zustände, die Zulauföffnung einer Entnahmeleitung für LH2 systematisch auch bei hohen Füllständen von Gasphase zeitweilig umspült sein kann. Dies ist im zeitlichen Verlauf der Entleerung des mobilen Behälters insbesondere lange vor dem Zeitpunkt möglich, vor dem die Gasphase in einem identischen immobilen Behälter die Zulauföffnung der LH2-Entnahmeleitung durch reine Entnahme erreicht. Aus diesem Grund wird bei mobilen Anwendungen H2 vorwiegend aus der Gasphase entnommen.

Dem Vorratsbehälter wird während der H2-Entnahme Wärme zugeführt, die zum Abdampfen von LH2 im Behälter und damit zur Aufrechterhaltung eines für die Förderung erforderlichen Behälterdruckes führt, der sonst durch die Entnahme soweit sinken würde, dass eine Förderung nicht mehr möglich wäre. Diese zur Druckhaltung benötigte Wärmezufuhr erfolgt über eine separate Heizung, die z. B. als elektrisch betriebenes Heizelement ausgeführt sein kann oder z.B. direkt durch Zufuhr von erwärmtem, gasförmigem H2, das einem erwärmten Vorlaufstrom gezielt abgezweigt und in den Innenbehälter (zurück-) geleitet wird.

Angestrebt wird, der Brennkraftmaschine den Kraftstoff im gasförmigen Aggregatzustand zumindest teilweise durch Hochdruckeinblasung in den oder die bereits ein verdichtetes Gas enthaltenden Brennraum bzw. Brennräume zur Verbrennung zuzuführen, da hierdurch die Gefahr von Rückzündungen minimiert und die Leistungsdichte sowie der Wirkungsgrad der Brennkraftmaschine erhöht werden können.

Zur Umsetzung einer derartigen Hochdruckeinblasung muss der Druck im gespeicherten Kraftstoff letztlich hoch genug sein. Dieser Hochdruck-Kraftstoff wird für die Direkteinblasung in die bereits verdichtetes Gas bzw. Luft-Kraftstoff-Gemisch enthaltenden Brennkraftmaschinen-Brennräume verwendet, was zeitlich jedoch nur solange funktioniert, als noch eine ausreichend große Menge von Kraftstoff im Drucktank vorhanden ist. Ist aus diesem jedoch eine gewisse Menge von Kraftstoff entnommen, so fällt zwangsläufig der Druck in diesem Drucktank soweit ab, dass eine Kraftstoff Direkteinblasung unter Hochdruck nicht mehr möglich ist.

Daraufhin kann der noch enthaltene und nurmehr unter verringertem Druck vorliegende Kraftstoff, zumindest in einem gewissen Umfang, der Brennkraftmaschine unter Niederdruck zur Verbrennung zugeführt werden, insbesondere unter äußerer Gemischbildung. Allerdings reicht die bei diesem Verfahren der Brennkraftmaschine zur Verfügung gestellte Kraftstoffmenge für Volllastbetrieb nicht aus, das heißt, ab einem bestimmten Grad der Entleerung des Drucktanks ist nur noch Teillastbetrieb bei geringen Lastanforderungen möglich.

Die DE 103 01 159 A1 zeigt eine Abhilfemaßnahme für diese geschilderte Problematik auf und beschreibt ein Entnahmesystem, bei dem die vorhandene Kraftstoffmenge möglichst lange zur Hochdruckeinblasung zur Verfügung steht. Es wird ein Kraftfahrzeug beschrieben, mit einer Brennkraftmaschine, die mit einem unter Normalbedingungen gasförmigen Kraftstoff betreibbar ist, indem ein Teil des Kraftstoffs, insbesondere für Teillastbetrieb der Brennkraftmaschine, unter Niederdruck, insbesondere unterer äußerer Gemischbildung, in den Brennraum der Brennkraftmaschine gelangt und ein weiterer Teil des Kraftstoffs, insbesondere für Volllastbetrieb der Brennkraftmaschine, durch Hochdruckeinblasung in den bereits verdichtetes Gas enthaltenden Brennraum zur Verbrennung zugeführt wird. Dabei wird der für die Hochdruckeinblasung erforderliche Kraftstoffdruck letztlich durch den in einem Drucktank des Kraftfahrzeugs herrschenden Kraftstoffdruck bereitgestellt und steht daher nur bis zu einem gewissen Entleerungsgrad des Drucktanks zur Verfügung. Deshalb sind im Kraftfahrzeug mindestens zwei Drucktanks eingebaut, aus denen die Brennkraftmaschine alternativ oder gemeinsam mit Kraftstoff versorgt wird.

Dadurch steht ein größerer Teil der Gesamtfüllmenge der Drucktanks für den Betrieb der Brennkraftmaschine zur Verfügung, im Vergleich mit einem Kraftfahrzeug mit einem Drucktank. Allerdings kann immer nur ein Versorgungsdruck erreicht werden, der kleiner oder gleich dem Betriebsdruck des Drucktanks ist.

Die US 4,016,836 beschreibt eine Kraftstoffversorgungseinrichtung für eine Brennkraftmaschine mittels eines Sorptionshydridspeichers als Kraftstofftank für Wasserstoff.

Die US 5,305,714 beschreibt eine Kraftstoffversorgungseinrichtung mit einem Hochdruckspeicher, aus dem ein Metallhydridtank befüllt wird der mittels eines Wärmetausches abwechselnd gekühlt oder geheizt werden kann, so dass in diesem Wasserstoff absorbiert und wieder abgegeben werden kann.

Weiter befasst sich die US 5,305,714 mit Metallhydriden, die nach dem Stand der Technik und über diesen hinausgehend auf erhöhten Temperaturniveaus verwendet werden könnten. Erstere können zum Beispiel auf Basis einer Legierung von Ti-Fe, Ni-La oder Ti-Mn aufgebaut sein und letztere Mg-Ni oder Mg-Mn Legierungen enthalten.

Aufgabe der vorliegenden Erfindung ist es, noch bessere Abhilfemaßnahmen für die genannten Nachteile aufzuzeigen. Außerdem sollen Versorgungsdrücke zum Verbraucher erzielt werden können, die weit über dem Betriebsdruckniveau des Wasserstoffspeichers liegen. Vorteilhafte Aus- und Weiterbildungen sind Inhalt der Unteransprüche.

Nach der Erfindung besteht eine Kraftstoffversorgungseinrichtung, mindestens zur anteiligen Versorgung eines in einem Brennraum gasförmigen Kraftstoff verbrennenden Verbrauchers mit Wasserstoff, insbesondere einer Brennkraftmaschine eines Kraftfahrzeugs, mindestens aus einem Kryotank als Wasserstoffspeicher und einer Druckerhöhungseinrichtung für den Wasserstoff aus wenigstens zwei druckfesten Gefäßen, die über eine Verbindungseinrichtung mit dem Brennraum des Verbrauchers verbunden ist und die mindestens einen Stoff enthält, insbesondere eine Hydrid bildende Metalllegierung, der unter Wärmezu- bzw. Wärmeabfuhr zyklisch Wasserstoff de- bzw. absorbiert, um mindestens vor dem Brennraum den Druck des gasförmigen Wasserstoffs mindestens zeitweise so zu erhöhen, dass der gasförmige Wasserstoff unter Ausnutzung eines Druckgefälles in den Brennraum einströmt. Die Kraftstoffversorgungseinrichtung ist dadurch gekennzeichnet, dass die Gefäße der Druckerhöhungseinrichtung hintereinander und/oder parallel zusammen geschaltet sind, um den Druck des gasförmigen Wasserstoffs stufenweise und/oder zeitversetzt zu erhöhen.

Das hat den Vorteil, dass die Versorgung des Verbrauchers mit Gas zuverlässig sichergestellt ist. Des weiteren können sehr hohe Förderdrücke erzeugt werden, die deutlich größer sind als der Bedarf des Verbrauchers. Eine solche Druckerhöhungseinrichtung ermöglicht Verfahren zur inneren Gemischbildung im Brennraum der Brennkraftmaschine, ist sehr verschleißarm und senkt so vorteilhafterweise die Wartungskosten. Es können sehr hohe Standzeiten und sehr geringe Ausfallraten erreicht werden, wobei ein plötzlicher Zusammenbruch der Wasserstoffversorgung nicht vorkommen kann, da keine schlagartig auftretenden Fehlerzustände zu erwarten sind. Ein vibrations-, schwingungs- und geräuschfreier Betrieb erhöht den Komfort und die Betriebspunktadaption kann auch unabhängig vom Zustand des Verbrauchers durch Variation des Förderdrucks stattfinden.

Eine besonders einfach aufgebaute Kraftstoffversorgungseinrichtung ist dadurch gekennzeichnet, dass die Verbindungseinrichtung aus mindestens einer Druckleitung besteht, die einen Ausgang der Druckerhöhungseinrichtung mit einem Eingang des Brennraums verbindet. Wenn die Verbindungseinrichtung mindestens einen Druckgasspeicher enthält, kann dieser als Zwischenspeicher zum Beispiel auch während der Stillstandszeit des Verbrauchers beladen werden und nicht nur während dessen Betrieb.

Eine vorteilhafte Ausführungsform der Kraftstoffversorgungseinrichtung zeichnet sich dadurch aus, dass dem druckfesten Gefäß der Druckerhöhungseinrichtung zur Wärmezufuhr Abwärme des Verbrauchers, insbesondere über dessen Abgas- oder dessen Kühleinrichtung, zugeführt wird.

Das hat den Vorteil, dass gegenüber mechanisch wirkenden Kompressoren, Verdichtern oder Pumpen für die Druckerhöhungseinrichtung keine exergetische Antriebsleistung zum Betrieb benötigt wird. Der Betrieb kann mit anergetischer Abwärme durchgeführt werden und sich daher günstig auf den energetischen Gesamtwirkungsgrad auswirken.

Bei einer weiteren bevorzugten Ausführung der Erfindung ist für die Kraftstoffversorgungseinrichtung eine Regeleinrichtung vorgesehen, die aufgrund von Eingangsdaten vom Verbraucher und/oder vom Druckgasspeicher und/oder von der Druckerhöhungseinrichtung und/oder vom Wasserstoffspeicher Ausgangsdaten erzeugt, die mindestens zur Betriebspunktadaption der Kraftstoffversorgungseinrichtung und/oder des Verbrauchers und/oder des Druckgasspeichers und/oder der Druckerhöhungseinrichtung und/oder des Wasserstoffspeichers verwendet werden.

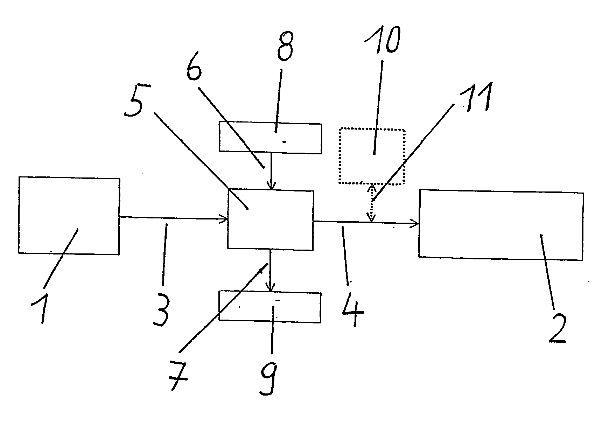

Im folgenden wird die Erfindung anhand eines bevorzugten Ausführungsbeispiels weiter erläutert. Die einzige Figur zeigt in schematischer Darstellung eine grundsätzliche Anordnung eines Sorptionshydridkompressors als Druckerhöhungseinrichtung zum Betrieb eines Verbrennungsmotors.

In einem nicht gezeichneten Kraftfahrzeug ist ein Wasserstoffspeicher beziehungsweise -erzeuger 1, insbesondere ein nicht gezeichneter Kryotank zur Speicherung von Flüssigwasserstoff, eingebaut. Der Wasserstoff dient als Kraftstoff zur Versorgung einer das Kraftfahrzeug antreibenden Brennkraftmaschine 2 als Verbraucher. Eine nicht gezeichnete Entnahmeeinrichtung für gasförmigen Wasserstoff aus dem Wasserstoffspeicher 1 versorgt über eine Entnahmeleitung 3 die Brennkraftmaschine 2 mit Wasserstoff.

Zur Bedruckung und Förderung des gasförmigen Wasserstoffs führt die Entnahmeleitung 3 zu einer Druckerhöhungseinrichtung, die dazu einen Sorptionshydridkompressor 5 verwendet. Ausgangsseitig mit seiner Druckseite ist dieser über eine Verbindungseinrichtung 4 an den Brennraum der Brennkraftmaschine 2 angeschlossen. Alternativ oder zusätzlich zur Brennkraftmaschine 2, könnten allerdings auch nicht gezeichnete Brennstoffzellen mit bedrucktem Wasserstoff versorgt werden.

Der Sorptionshydridkompressor 5 ist außerdem an für die Zufuhr und die Abfuhr von Wärmeströmen geeigneten Leitungen 6, 7 angeschlossen. Die zum Betrieb des Sorptionshydridkompressors 5 benötigten Betriebswärmeströme können auf jede Art erzeugt oder bereitgestellt werden, hier werden jedoch zur Wärmezufuhr 8 Abwärmeströme der Brennkraftmaschine 2 aus Abgasstrom und Motorkühlung verwendet.

Die Wärmezufuhr 8 und -abfuhr 9 kann auch durch jeden sonstigen hydraulischen oder pneumatischen Transport wärmeführender Medien erfolgen, zum Beispiel Wärmezufuhr 8 über Abgasströme bzw. Wärmeabfuhr 9 durch Gebläsekühlung. Oder auch durch Ausnutzung von Verdampfungs- und oder Kondensationsenthalpien (z.B. mittels einer sogenannten Heat-Pipe). Oder auch durch jede Form von Strahlung (z.B. Laser, Microwelle, UV, IR, sonst. elektromagentische Wellen). Oder auch durch mechanische Reaktionswärme (z.B. Reibungswärme) oder durch Übertragung von Druckstörungen (z.B. durch mechanische Impulsstöße, Schalldruck). Oder durch elektrisches Heizen oder Kühlen (z.B. durch Peltier-Element). Oder insbesondere auch durch Nutzung von Absorptions- bzw. Desorptionswärmeströmen, die bei Änderung des Belade- oder Sättigungszustandes eines Hydrids mit Wasserstoff entstehen können. Oder auch aus beliebigen Kombinationen verschiedener, funktional integrierter Verfahren. Zur Wärmeabfuhr 9 kann insbesondere auch das Kühlsystem der Brennkraftmaschine 2 und/oder auch der zur Druckhaltung eines Kryotanks zugeführte Wärmestrom verwendet werden.

Der Förderdruck des Sorptionshydridkompressors 5 kann sich im Bereich von 2 bar abs. bis 350 bar abs. bewegen. Bei einer Zwischenspeicherung des geförderten Wasserstoffs in einem oder mehreren zwischen dem Sorptionshydridkompressor 5 und der Brennkraftmaschine 2 angeordneten Druckgasspeicher 10 können auch Förderdrücke bis über 800 bar abs. erreicht werden. Der Druckgasspeicher 10 kann auch während der Stillstandszeiten der Brennkraftmaschine 2 vom Sorptionshydridkompressor 5 beladen werden, zum Beispiel auch zur Speicherung von Wasserstoffverlustmengen, die aus dem Wasserstoffspeicher 1 stammen, insbesondere sogenannte Boil-Off-Gase. Dazu ist der Druckgasspeicher 10 an die Verbindungseinrichtung 4, zum Beispiel über eine Druckleitung 11, angeschlossen. In die Druckleitung 11 kann eine nicht gezeichnete Regeleinrichtung eingebaut sein. Die Regeleinrichtung kann zum Beispiel aus mindestens einem zwischen Druckgasspeicher 10 und Verbindungseinrichtung 4 eingeschalteten Druckregelventil bestehen.

Durch das im Druckgasspeicher 10 gespeicherte Wasserstoffgas kann die Brennkraftmaschine 2 über Zeiträume betrieben werden, die zum Beispiel ein Sorptionshydridkompressor 5 benötigt, um den Betriebsdruck zu erreichen, oder die ein Abgaskatalysator benötigt, um seine Betriebstemperatur zu erreichen. Oder über dieein Wasserstoffspeichersystem befüllt wird, das Wasserstoff als Betriebmittelreserve speichert ("Reservekanister"). Des weiteren über Zeiträume, in denen flüssige oder gasförmige Medien derart erwärmt werden, dass sich der Zeitraum, bis zu dem Teile der Brennkraftmaschine 2 oder Teile einer Klimatisierungseinrichtung eine günstige Betriebstemperatur erreichen, verkürzt.

Im Sorptionshydridkompressor 5 können sowohl Sorptionshydride nach dem Stand der Technik angewendet werden, als auch solche, die über diesen hinausgehend auf erhöhten Temperaturniveaus, insbesondere auch während der Desorptionsphase betrieben werden können. Dies insbesondere auch auf solchen Temperaturniveaus, die bei Versorgung der Brennkraftmaschine 2 durch Nutzung von hierfür typischen Abwärmeströmen z.B. aus deren Abgas oder Kühlwasser möglich sind. Damit sind gegenüber dem Stand der Technik deutlich erhöhte gravimetrische Speicherdichten möglich, wodurch deutlich geringere Gewichte und Bauvolumina eines Sorptionshydridkompressors 5 bei gegebenem Förderstrom erzielt werden können.

Die Bauweise des Sorptionshydridkompressors 5 kann unterschiedlich sein. Es sind alle Kombinationen eines Sorptionsbetts denkbar, die durch ein-oder mehrstufiges Verschalten und/oder ein- oder mehrreihiges Verschalten von Sorptionsbetten hervorgehen. Außerdem Bauweisen und Betriebsweisen, die zum Beispiel der Betriebspunktadaption dienen und/oder der Reduktion der zum Zyklieren eines enthaltenen Hydrids zyklisch benötigten Wärmemengen.

## Patentansprüche

1. Kraftstoffversorgungseinrichtung mindestens zur anteiligen Versorgung eines in einem Brennraum gasförmigen Kraftstoff verbrennenden Verbrauchers mit Wasserstoff, insbesondere einer Brennkraftmaschine (2) eines Kraftfahrzeugs, mindestens bestehend aus einem Kryotank als Wasserstoffspeicher (1) und einer Druckerhöhungseinrichtung für den Wasserstoff aus wenigstens zwei druckfesten Gefäßen, die über eine Verbindungseinrichtung (4) mit dem Brennraum des Verbrauchers verbunden ist und die mindestens einen Stoff enthält, insbesondere eine Hydrid bildende Metalllegierung, der unter Wärmezu- (8) bzw. Wärmeabfuhr (9) zyklisch Wasserstoff de- bzw. absorbiert, um mindestens vor dem Brennraum den Druck des gasförmigen Wasserstoffs mindestens zeitweise so zu erhöhen, dass der gasförmige Wasserstoff unter Ausnutzung eines Druckgefälles in den Brennraum einströmt, wobei die Gefäße der Druckerhöhungseinrichtung hintereinander und/oder parallel zusammen geschaltet sind, um den Druck des gasförmigen Wasserstoffs stufenweise und/oder zeitversetzt zu erhöhen.

2. Kraftstoffversorgungseinrichtung nach Anspruch 1, **dadurch gekennzeichnet, dass** die Verbindungseinrichtung (4) aus mindestens einer Druckleitung besteht, die einen Ausgang der Druckerhöhungseinrichtung mit einem Eingang des Brennraums verbindet.

3. Kraftstoffversorgungseinrichtung nach einem der Ansprüche 1 oder 2, **dadurch gekennzeichnet, dass** die Verbindungseinrichtung (4) mindestens einen Druckgasspeicher (10) enthält.

4. Kraftstoffversorgungseinrichtung nach einem der Ansprüche 1 bis 3, **dadurch gekennzeichnet, dass** dem druckfesten Gefäß der Druckerhöhungseinrichtung zur Wärmezufuhr (8), Abwärme des Verbrauchers, insbesondere über dessen Abgas- oder dessen Kühleinrichtung, zugeführt wird.

5. Kraftstoffversorgungseinrichtung nach einem der Ansprüche 1 bis 4, **dadurch gekennzeichnet, dass** eine Regeleinrichtung vorgegehen ist, die aufgrund von Eingangsdaten vom Verbraucher und/oder vom Druckgasspeicher (10) und/oder von der Druckerhöhungseinrichtung und/oder vom Wasserstoffspeicher (1) Ausgangsdaten erzeugt, die mindestens zur Betriebspunktadaption der Kraftstoffversorgungseinrichtung und/oder des Verbrauchers und/oder des Druckgasspeichers (10) und/oder der Druckerhöhungseinrichtung und/oder des Wasserstoffspeichers (1) verwendet werden.

## Claims

1. A fuel supply device at least for the proportional supply of a consumer burning gaseous fuel in a combustion chamber with hydrogen, more especially an internal combustion engine (2) of a motor vehicle, at least comprising a cryotank as the hydrogen store (1) and a pressure increasing device for the hydrogen made of at least two pressure-resistant vessels, which device is connected by means of a connection device (4) to the combustion chamber of the consumer and which contains at least one material, more especially a metal alloy which forms a hydride, which cyclically desorbs or absorbs hydrogen with heat supply (8) or heat dissipation (9), in order to at least temporarily increase the pressure of the gaseous hydrogen at least in front of the combustion chamber in such a way that the gaseous hydrogen flows into the combustion chamber utilising a pressure drop, wherein the vessels of the pressure increase device are connected to one another behind one another and/or in parallel in order to increase the pressure of the gaseous hydrogen stepwise and/or in a time-delayed manner.

2. A fuel supply device according to claim 1, **characterised in that** the connection device (4) comprises at least one pressure line, which connects an outlet of the pressure increase device to an inlet of the combustion chamber.

3. A fuel supply device according to any one of claims 1 or 2, **characterised in that** the connection device (4) contains at least one compressed gas store (10).

4. A fuel supply device according to any one of claims 1 to 3, **characterised in that** waste heat of the consumer, is supplied, more especially via the exhaust gas or cooling device thereof, to the pressure-resistant vessel of the pressure increase device for heat supply (8).

5. A fuel supply device according to any one of claims 1 to 4, **characterised in that** a control device is provided, which, on the basis of input data from the consumer and/or from the compressed gas store (10) and/or from the pressure increase device and/or from the hydrogen store (1), produces output data, which are used at least for the operating point adaptation of the fuel supply device and/or the consumer and/or the compressed gas store (10) and/or the pressure increase device and/or the hydrogen store (1).

## Revendications

1. Installation d'alimentation en carburant au moins pour l'alimentation proportionnelle d'un consommateur brûlant un combustible à l'état gazeux dans une chambre de combustion, avec de l'hydrogène, notamment un moteur à combustion interne (2) d'un véhicule automobile, composé au moins d'un réservoir cryogénique comme réservoir d'hydrogène (1) et d'une installation de relevage de pression pour l'hydrogène à partir d'au moins deux récipients résistant à la pression, reliés à la chambre de combustion de l'utilisateur par une installation de liaison (4) et contenant au moins une matière, notamment un alliage métallique formant un hybride, pour désorber ou absorber de manière cyclique de l'hydrogène par apport de chaleur (8) ou évacuation de chaleur (9), afin d'augmenter la pression de l'hydrogène à l'état gazeux, au moins de temps en temps et au moins en amont de la chambre de combustion,
l'hydrogène à l'état gazeux arrivant dans la chambre de combustion en utilisant une différence de pression, et
les récipients de l'installation de relevage de pression étant branchés l'un derrière l'autre et/ou en parallèle pour relever par palier et/ ou de manière décalée dans le temps, la pression de l'hydrogène à l'état gazeux.

2. Installation d'alimentation en carburant selon la revendication 1,
**caractérisée en ce que**
l'installation de liaison (4) se compose d'au moins une conduite de pression reliant une sortie de l'installation de relevage de pression à une entrée de la chambre de combustion.

3. Installation d'alimentation en carburant selon la revendication 1 ou 2,
**caractérisée en ce que**
l'installation de liaison (4) comporte au moins un accumulateur de gaz sous pression (10).

4. Installation d'alimentation en carburant selon les revendications 1 à 3,
**caractérisée en ce que**
le récipient résistant à la pression de l'installation de relevage de pression reçoit comme apport thermique (8), de la chaleur dégagée par l'utilisateur notamment par l'intermédiaire de son installation d'évacuation des gaz d'échappement ou de son installation de refroidissement.

5. Installation d'alimentation en carburant selon les revendications 1 à 4,
**caractérisée par**
une installation de régulation qui, sur le fondement de données d'entrée de l'utilisateur et/ou de l'accumulateur de gaz sous pression (10) et/ou de l'installation de relevage de pression et/ou de l'accumulateur d'hydrogène (1), génère des données de sortie qui sont utilisés au moins pour l'adaptation du point de fonctionnement de l'installation d'alimentation en carburant et/ou de l'utilisateur et/ou de l'accumulateur de gaz comprimé (10) et/ou de l'installation de relevage de pression et/ ou de l'accumulateur d'hydrogène (1).
